# EUROPÄISCHE PATENTSCHRIFT

(11) **EP 4 321 030 B1**
(45) Veröffentlichungstag und Bekanntmachung des Hinweises auf die Patenterteilung: **26.02.2025**
(21) Anmeldenummer: 23185826.7
(22) Anmeldetag: 17.07.2023
(51) Int. Cl.: A22C 11/02, A22C 13/00, A23P 30/25

(54) **KOEXTRUSIONSKOPF, NAHRUNGSMITTELMASCHINE UND MONTAGEVERFAHREN**
COEXTRUSION HEAD, FOOD PREPARATION MACHINE AND ASSEMBLY METHOD
TÊTE DE COEXTRUSION, MACHINE ALIMENTAIRE ET PROCÉDÉ D'ASSEMBLAGE

(30) Priorität: 11.08.2022 DE 102022120367
(43) Veröffentlichungstag der Anmeldung: 14.02.2024
(73) Patentinhaber: VEMAG Maschinenbau GmbH, 27283 Verden/Aller (DE)
(72) Erfinder: Baris, Halis, 27313 Dörverden (DE); Knodel, Peter, 28876 Oyten (DE); Grote, Olaf, 27324 Eystrup (DE); Regenhardt, Malte, 27313 Dörverden-Hülsen (DE)
(74) Vertreter: Eisenführ Speiser

(56) Entgegenhaltungen:
- EP-A1- 2 719 284
- US-A1- 2003 228 837
- US-A1- 2021 212 328

## Beschreibung

Die Erfindung bezieht sich auf einen Koextrusionskopf für eine Nahrungsmittelmaschine, insbesondere eine Koextrusionsmaschine zum Koextrudieren einer Lebensmittelmasse und einer die Lebensmittelmasse umgebenden Hülle mit wenigstens einem Förderleitungsabschnitt mit einem Innenrohr zur Führung der zu einem Strang zu formenden Lebensmittelmasse in einer Produktionsrichtung, wobei ein einlassseitiges Ende des Förderleitungsabschnitts mit einem Auslass einer Füllmaschine verbindbar ist. Ein solcher Koextrusionskopf umfasst ferner ein sich in Produktionsrichtung von dem Förderleitungsabschnitt erstreckenden und das Innenrohr umgebendes Gehäuse und eine zwischen Innenrohr und Gehäuse ausgebildete Aufnahmekammer für ein auf den Strang aufzubringende Hüllmaterial, wobei die Aufnahmekammer einen Gehäuseeinlass für das Hüllmaterial aufweist. Des Weiteren bezieht sich die Erfindung auch auf eine Nahrungsmittelmaschine zum Herstellen eines Stranges aus einer Lebensmittelmasse sowie ein Verfahren zur Montage eines Koextrusionskopfes.

Vorrichtungen und Verfahren vorbezeichneter Gattung werden üblicherweise zum Herstellen von Wurststrängen verwendet. Insbesondere werden solche Vorrichtungen eingesetzt, um Wurststränge mit einem auf die Außenseite aufgebrachten Hüllmaterial vorzugsweise im Wesentlichen kontinuierlich herzustellen. Grundsätzlich können Koextrusionsmaschinen aber auch zum Koextrudieren verschiedenster Substanzen eingesetzt werden.

Die Lebensmittelmasse, insbesondere das Wurstbrät, wird üblicherweise in einem Fülltrichter einer ersten Füllmaschine bereitgehalten und mittels einer Förderpumpe zum Erzeugen eines kontinuierlichen Förderstromes der Lebensmittelmasse in Richtung eines Auslasses gefördert. Statt die Lebensmittelmasse in eine Hülle wie beispielsweise einen Kunstdarm oder Naturdarm zu geben, kann auf die Außenseite der Lebensmittelmasse auch ein zunächst fließfähiges Hüllmaterial aufgebracht werden, welches später aushärtet. Das Hüllmaterial schützt die Lebensmittelmasse auch unter hygienischen Gesichtspunkten und verleiht dem aus der Lebensmittelmasse erzeugten Strang eine erhöhte Festigkeit, wodurch ein ungewolltes Brechen des Stranges erschwert oder vermieden werden soll. Als Hüllmaterial zum Aufbringen auf die Oberfläche des erzeugten Stranges wird zum Beispiel Collagen oder Alginat verwendet. Collagen und Alginat sind fließfähige Hüllmaterialien, die sich nach dem Aufbringen auf die Strangoberfläche nach relativ kurzer Zeitdauer verfestigen und eine feste Hülle an dem Strang ausbilden. Das Hüllmaterial wird üblicherweise in einem Fülltrichter einer zweiten Füllmaschine bereitgehalten und mittels einer Förderpumpe zum Erzeugen eines kontinuierlichen Förderstromes der Lebensmittelmasse in Richtung eines Auslasses der zweiten Füllmaschine gefördert. Der Auslass der ersten Füllmaschine und der Auslass der zweiten Füllmaschine sind dabei zumeist fluidleitend mit einem Koextrusionskopf verbunden.

Die EP 2 719 284 A1 zeigt einen solchen Koextrusionskopf. Ein einlassseitiges Ende einer Förderleitung wird dabei mit dem Auslass der ersten Füllmaschine verbunden und eine Einlassöffnung eines Gehäuses des Koextrusionskopfes wird mit dem Auslass der zweiten Füllmaschine zum Einlassen des Alginats verbunden. Die Förderleitung wird dabei in das Gehäuse eingeschraubt und ein Innenrohr der Förderleitung erstreckt sich zumindest abschnittsweise durch das Gehäuse. Zwischen einer inneren Wandung des Gehäuses und dem Innenrohr wird dabei eine Aufnahmekammer ausgebildet, in welcher die Einlassöffnung des Gehäuses mündet. Das Gehäuse weist ferner eine ein auslassseitiges Ende des Innenrohres umgebene Auslassöffnung auf, deren Durchmesser größer als der auslassseitige Durchmesser der Förderleitung ist. Durch den so ausgebildeten Spalt kann das in der Aufnahmekammer aufgenommene Hüllmaterial austreten und wird auf die durch die Förderleitung geförderte Lebensmittelmasse aufgebracht. Das Innenrohr der Förderleitung weist zu diesem Zweck auslassseitig eine reduzierte Wandstärke auf, sodass das Hüllmaterial mit nur einem geringen Abstand zur geförderten Lebensmittelmasse zunächst entlang der Außenseite des Füllrohres gefördert und anschließend auf die Lebensmittelmasse aufgebracht werden kann. Durch die geringe Wandstärke im auslassseitigen Bereich ist die Förderleitung anfällig für Verformungen und Verspannungen. Weiterhin muss die Förderleitung zu Reinigungszwecken vom Gehäuse getrennt werden und wird in diesem Zustand nicht länger durch das umgebene Gehäuse geschützt. Insbesondere in diesem Zustand besteht ein hohes Risiko der Beschädigung und insbesondere von Verformungen der Förderleitung. Weiterhin kann es beim Anschluss etwaiger Zuleitungen an den Gehäuseeinlass zu einer Verspannung der Förderleitung relativ zum Gehäuse kommen, welche einen ungleichmäßigen Spalt zwischen Förderleitung und Gehäuse bedingen kann.

Die US 2003/228837 A1 zeigt einen Koextrusionskopf gemäß dem Oberbegriff von Anspruch 1.

An dieser Stelle setzt die Erfindung an, deren Aufgabe es ist, zumindest einen der aus dem Stand der Technik bekannten Nachteile zu überwinden. Insbesondere ist Aufgabe der vorliegenden Erfindung, eine robustere Nahrungsmittelmaschine, einen robusteren Koextrusionskopf für eine Nahrungsmittelmaschine anzugeben, dessen Reinigung vereinfacht ist und ein Verfahren zur Montage eines Koextrusionskopfes anzugeben.

Die Erfindung löst die zugrundeliegende Aufgabe in einem ersten Aspekt durch einen Koextrusionskopf nach Anspruch 1.

Die Erfindung schlägt vor, dass das Gehäuse und der Förderleitungsabschnitt integral ausgebildet sind. Weiterhin schlägt die Erfindung vor, dass der Koextrusionskopf ferner einen mit dem Gehäuse, insbesondere einem distalen Ende des Gehäuses verbundenen Düsenaufsatz mit einer korrespondierend zum Innenrohr ausgebildeten Düsenöffnung aufweist. Mit anderen Worten schlägt die Erfindung eine einteilige Ausbildung des Gehäuses und des Förderleitungsabschnitts einschließlich des Innenrohres vor, wobei ein Düsenaufsatz als separates Bauteil mit dem Gehäuse verbunden wird. Das Innenrohr muss somit zu Reinigungszwecken nicht länger vom Gehäuse getrennt werden, sodass das Gehäuse auch bei der Reinigung des Innenrohres dieses weiterhin umgibt und somit schützt. Das einteilige Bauteil, welches das Innenrohr und das Gehäuse kombiniert, ist somit deutlich robuster und kann in einfacher Weise gehandhabt, insbesondere gereinigt werden. Durch die variabel mit dem Gehäuse verbindbare Düsenplatte können des Weiteren verschiedene Düsenaufsätze mit einem Innenrohr verwendet werden.

Die Produktionsrichtung bezeichnet vorliegend die Richtung der Lebensmittelmasse von der ersten Füllmaschine durch den Förderleitungsabschnitt einschließlich des Innenrohres und schließlich auch durch eine gegebenenfalls nachgeschaltete Verfestigungseinrichtung. Es handelt sich also um den Weg der Lebensmittelmasse und später des Stranges. Diese entspricht im Bereich des Koextrusionskopfes einer axialen Richtung, entlang derer sich der Koextrusionskopf, insbesondere das Gehäuse und der Förderleitungsabschnitt erstrecken.

Unter Koextrusion wird im Sinne der Erfindung das Zusammenführen von verschiedenen Substanzen, insbesondere mindestens einer Lebensmittelmasse und Hüllmaterial zu einem Produkt, insbesondere zu einem Lebensmittelprodukt verstanden. Die Substanzen werden dabei in zwei oder mehr Füllmaschinen oder dergleichen vorgehalten und in einer Koextrusionsvorrichtung bzw. einem Koextrusionskopf zusammengebracht.

Die Düsenöffnung des erfindungsgemäßen Koextrusionskopfes erstreckt sich bevorzugt derart beabstandet zu dem Innenrohr, dass ein das Innenrohr umgebender Spalt zur Ausbringung von Hüllmaterial ausgebildet wird. Durch den zwischen Innenrohr und Düsenöffnung gebildeten Spalt kann das Hüllmaterial radial außerhalb des Innenrohres aus der Aufnahmekammer austreten und wird so unmittelbar auf den austretenden Strang aufgebracht. Durch die als separates Bauteil ausgebildete Düsenplatte kann ein einteiliges, das Gehäuse und den Förderleitungsabschnitt umfassendes Bauteil mit verschiedenen Düsenaufsätzen zur Herstellung von Strängen mit Hüllmaterial verschiedener Dicke verwendet werden. Der Spalt wird dabei in einer Ebene orthogonal zur Produktionsrichtung zwischen Düsenöffnung und Innenrohr gebildet und ist zur Durchführung von Hüllmaterial ausgebildet.

Bevorzugt ist der Spalt dabei gleichförmig ausgebildet und weist besonders bevorzugt eine Spaltdicke in einem Bereich von 0,1 mm bis 1 mm auf. Die Spaltdicke hängt dabei insbesondere von der Viskosität des aufzubringenden Hüllmaterials ab.

Gemäß einer bevorzugten Ausführungsform weist der Spalt ein in Produktionsrichtung variierende Breite auf, die am distalen auslassseitigen Ende des Innenrohres ein Minimum annimmt. Somit kann das Innenrohr zum Einbringen in die Düsenöffnung zunächst durch eine vergrößerte Düsenöffnung eingeführt werden und nimmt benachbart zum auslassseitigen Ende des Innenrohres ein Minimum an, sodass in diesem Bereich bevorzugt ein Spalt mit einer geringen Spaltdicke ausgebildet wird.

Vorzugsweise ist die Düsenöffnung dazu ausgebildet, um zumindest ein auslassseitiges Ende des Innenrohres aufzunehmen. Somit wird das Innenrohr durch die Düsenöffnung geführt und insbesondere abgestützt. Das Innenrohr wird somit gegenüber Erschütterungen und Stößen durch die Düsenplatte geschützt.

Weiter bevorzugt weist das Innenrohr, insbesondere ein im Innenrohr ausgebildeter Strömungskanal, im Bereich der Düsenöffnung einen konstanten Strömungsquerschnitt auf und ist in Produktionsrichtung verjüngend ausgebildet. Mit anderen Worten nimmt die Wandstärke des Innenrohres auslassseitig ab, wobei der Strömungsquerschnitt konstant bleibt. Durch die Reduzierung der Wandstärke des Füllrohres in Produktionsrichtung wird auslassseitig der Abstand des durch das Innenrohr geförderten Strangs und des entlang der Außenseite des Füllrohres durch den Spalt geführten Hüllmaterials reduziert. Durch die verjüngende Form des Füllrohres wird dabei das Fließen des Hüllmaterials entlang der Außenseite des Innenrohres zusätzlich unterstützt.

Vorzugsweise ist die Düsenöffnung in Produktionsrichtung trichterförmig ausgebildet. Es soll dabei verstanden werden, dass das schmalere Ende der trichterförmigen Düsenöffnung in Produktionsrichtung zeigt und das breitere Ende der trichterförmigen Düsenöffnung entgegen der Produktionsrichtung zeigt. Zur Montage wird das Innenrohr somit auf Seiten des größeren Querschnitts der Düsenöffnung in die Düsenöffnung angebracht und in die Endposition geführt. Durch die trichterförmige Ausbildung wird das Fließen des Hüllmaterials entlang des Innenrohres durch die Düsenöffnung erleichtert. Ferner wird das Aufsetzen der Düsenplatten auf das Innenrohr durch den zunächst größeren Querschnitt der trichterförmigen Düsenöffnung erleichtert und das Risiko einer Beschädigung des Innenrohres reduziert.

Bevorzugt ist der Düsenaufsatz mit dem Gehäuse durch eine form- und/oder kraftschlüssige Verbindung verbunden. Form- und/oder kraftschlüssige Verbindungen können bevorzugt als lösbare Verbindungen ausgebildet werden und ermöglichen somit eine einfache Demontage des Düsenaufsatzes.

Besonders bevorzugt ist der Düsenaufsatz mit dem Gehäuse durch mindestens eine der folgenden Verbindungen verbunden: eine Clamp-Verbindung, Bajonett-Verbindung oder eine Schraubverbindung. Im Falle einer zylindrischen Ausbildung des Innenrohres kann das Gehäuse mit dem Innenrohr somit beispielsweise durch eine Bajonett-Verbindung oder eine Schraubverbindung verbunden werden. Die Verwendung einer Clamp-Verbindung bzw. einer Klemmverbindung oder Schnappverbindung im Allgemeinen ermöglicht über dies auch die Verwendung abweichender Geometrien des Füllrohres, mit beispielsweise quadratischen oder dreieckigen Strömungsquerschnitten.

Vorzugsweise weist der das Gehäuse eine erste Passfläche und der Düsenaufsatz eine zweite Passfläche auf, wobei der Düsenaufsatz mit dem Gehäuse durch einen Passsitz verbunden ist. Der Passsitz ist vorzugsweise zylindrisch oder kegelförmig ausgebildet. Durch einen Passsitz ist eine lösbare Verbindung zwischen Düsenaufsatz und Gehäuse sichergestellt. Gleichzeitig wird ein ungewolltes Austreten von Hüllmaterial aufgrund zu großer Toleranzen zwischen Düsenaufsatz und Gehäuse vermieden.

Bevorzugt weist der Koextrusionskopf ferner eine zwischen Gehäuse und Düsenaufsatz angeordnete Dichtung, insbesondere einen Dichtungsring auf. Somit kann zuverlässig ein ungewolltes Austreten von Hüllmaterial verhindert werden.

Weiter bevorzugt sind der Förderleitungsabschnitt und das Gehäuse in einem Gussverfahren hergestellt. Ein Gussverfahren ermöglicht in zweckmäßiger Weise die Herstellung eines bevorzugt metallischen Integral ausgebildeten Gehäuses mit einem Förderleitungsabschnitt einschließlich eines innerhalb des Gehäuses angeordneten Innenrohres. Alternativ kann der Förderleitungsabschnitt mit dem Gehäuse vorzugsweise verschweißt werden.

Gemäß einer bevorzugten Ausführungsform schließt das Gehäuse in Produktionsrichtung mit dem auslassseitigen Ende des Innenrohres ab. Besonders bevorzugt steht zumindest ein Teil des Gehäuses in Produktionsrichtung gegenüber dem distalen Ende des Innenrohres vor. Somit wir das Innenrohr vollständig durch das Gehäuse gegenüber quer zur Produktionsrichtung wirkenden Kräften geschützt. Darüber hinaus schützt das Gehäuse das Innenrohr auch gegenüber Stürzen, bei welchen Kräfte entgegen der Produktionsrichtung auf den Koextrusionskopf wirken.

Bevorzugt ist das Gehäuse korrespondierend zum Innenrohr ausgebildet und erstreckt sich in Produktionsrichtung parallel zu dem Innenrohr. Besonders bevorzugt weist das Gehäuse eine im Wesentlichen zylindrische Form auf.

Besonders bevorzugt weist der Düsenaufsatz eine Mündungsfläche auf, welche die Düsenöffnung umgibt und die insbesondere in Produktionsrichtung zurückgesetzt ist. Weiter bevorzugt steht das distale auslassseitige Ende des Innenrohres gegenüber der Mündungsfläche in Produktionsrichtung vor. Die aus dem Innenrohr austretende Lebensmittelmasse expandiert zunächst in einer Richtung quer zur Produktionsrichtung. Die Lebensmittelmasse geht also auf. Durch das Vorstehen des Innenrohres in Produktionsrichtung behindert die expandierende Lebensmittelmasse nicht das Ausbringen des Hüllmaterials, insbesondere durch den um das Innenrohr herum gebildeten Spalt. Das Hüllmaterial kann somit entlang der Außenseite des Innenrohres aus der Aufnahmekammer herausfließen und trifft erst dort auf die expandierende Lebensmittelmasse. Durch das Expandieren zieht die Lebensmittelmasse das Hüllmaterial in Expansionsrichtung mit nach außen und in Produktionsrichtung nach vorne, sodass sich eine gleichmäßige Hülle auf der Lebensmittelmasse bildet. Durch die Mündungsfläche, welche in Produktionsrichtung zurückgesetzt gegenüber dem übrigen Teil des Düsenaufsatzes ist, wird das Innenrohr in montierten Zustand auch im vorstehenden Bereich zuverlässig geschützt.

Vorzugsweise weist der Förderleitungsabschnitt einlassseitig einen Strömungskanal mit einem vergrößerten Strömungsquerschnitt auf, der sich in Produktionsrichtung reduziert. Ferner weist das Innenrohr auslassseitig einen Strömungskanal mit konstantem Strömungsquerschnitt auf, welcher in das auslassseitige Ende des Innenrohres mündet. Zwischen dem Strömungskanal mit dem konstanten Strömungsquerschnitt und dem Strömungskanal mit dem sich reduzierendem Strömungsquerschnitt ist bevorzugt ein Verdichtungseinsatz angeordnet. Der Verdichtungseinsatz ist dazu eingerichtet, den Strömungsquerschnitt bereichsweise zu reduzieren, sodass ein erhöhter Druck auf die Lebensmittelmasse ausgeübt wird und diese verdichtet wird.

Weiter bevorzugt weist die Aufnahmekammer eine Entlüftungsöffnung, die bevorzugt im montierten Zustand des Koextrusionskopfes, insbesondere in vertikaler Richtung, oberhalb des Gehäuseeinlasses angeordnet ist. Das durch den Einlass einströmende Hüllmaterial steigt somit langsam in der Aufnahmekammer auf und verdrängt die darin befindliche Luft, welche durch die Entlüftungsöffnung entweichen kann. Somit wird ein gleichmäßiges Aufbringen des Hüllmaterials ohne eventuelle Lufteinschlüsse gewährleistet.

Die Erfindung betrifft in einem zweiten Aspekt eine Nahrungsmittelmaschine, insbesondere eine Koextrusionsmaschine zum Herstellen eines Stranges aus einer Lebensmittelmasse. Die Nahrungsmittelmaschine umfasst eine erste Füllmaschine mit einem ersten Fülltrichter zum Aufnehmen der Lebensmittelmasse, einer ersten Förderpumpe zum Fördern der Lebensmittelmasse und einem ersten Auslass zum Abgeben der Lebensmittelmasse. Ferner umfasst die Nahrungsmittelmaschine eine zweite Füllmaschine mit einem zweiten Fülltrichter zum Aufnehmen der Lebensmittelmasse, einer zweiten Förderpumpe zum Fördern der Lebensmittelmasse und einem zweiten Auslass zum Abgeben der Lebensmittelmasse. Weiterhin umfasst die Nahrungsmittelmaschine einen mit dem ersten Auslass und dem zweiten Auslass verbundenen Koextrusionskopf. Die Erfindung löst die eingangs genannte Aufgabe im zweiten Aspekt dadurch, dass der Koextrusionskopf gemäß dem ersten Aspekt der Erfindung ausgebildet ist. Vorteile und bevorzugte Ausführungsformen des ersten Aspekts der Erfindung sind somit ebenso Vorteile und bevorzugte Ausführungsformen des zweiten Aspekts der Erfindung.

Bevorzugt umfasst die Nahrungsmittelmaschine ferner mindestens eine Verfestigungseinrichtung zum Verfestigen des auf den Strang aufgebrachten Hüllmaterials. Eine solche Verfestigungseinrichtung ist bevorzugt benachbart zum auslassseitigen Ende des Innenrohres angeordnet. Bevorzugt umfasst eine solche Verfestigungseinrichtung ein oder mehrere Sprühköpfe zum Aufsprühen eines Verfestigungsmaterials, wie beispielsweise Kalziumchlorid zum Verfestigen des Hüllmaterials. Weiter bevorzugt umfasst eine solche Verfestigungseinrichtung eine Aufnahmeeinrichtung zum Aufnehmen von überschüssigem Verfestigungsmaterial mit einem Ablauf zum Abführen desselbigen.

Die Erfindung betrifft in einem dritten Aspekt ein Verfahren zur Montage eines Koextrusionskopfes, insbesondere eine Koextrusionskopfes gemäß dem ersten Aspekt der Erfindung. Das Verfahren löst die eingangs genannte Aufgabe dadurch, dass es die Schritte umfasst: Bereitstellen von wenigstens einem Förderleitungsabschnitt mit einem Innenrohr zur Führung der zu einem Strang zu formenden Lebensmittelmasse in einer Produktionsrichtung, wobei ein einlassseitiges Ende des Förderleitungsabschnittes mit einem Auslass einer Füllmaschine verbindbar ist und eines sich in Produktionsrichtung von dem Förderleitungsabschnitt erstreckenden und das Innenrohr umgebenden Gehäuses, wobei zwischen Innenrohr und Gehäuse eine Aufnahmekammer für ein auf den Strang aufzubringende Hüllmaterial ausgebildet ist, wobei die Aufnahmekammer einen Gehäuseeinlass für das Hüllmaterial aufweist und wobei der Förderleitungsabschnitt und das Gehäuse integral ausgebildet sind; Verbinden eines distalen Endes des Gehäuses mit einem Düsenaufsatz mit einer korrespondierend zum Innenrohr ausgebildeten Düsenöffnung zum Verschließen der Aufnahmekammer.

Durch das Bereitstellen eines mit einem Gehäuse integral ausgebildeten Förderleitungsabschnitts mit einem Innenrohr, einer zwischen Innenrohr und Gehäuse ausgebildeten Aufnahmekammer und einem Düsenaufsatz zum Verbinden mit einem distalen Ende des Gehäuses macht sich dieses die eingangs in Bezug auf den ersten Aspekt beschriebenen Vorteile zu eigen. Vorteile und bevorzugte Ausführungsformen des ersten Aspekts der Erfindung sind somit ebenso Vorteile und bevorzugte Ausführungsformen des dritten Aspekts der Erfindung.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer Nahrungsmittelmaschine zum Herstellen eines Stranges aus einer Lebensmittelmasse mit einem erfindungsgemäßen Koextrusionskopf sowie einer Weiterverarbeitungseinrichtung;
- Fig. 2:: eine perspektivische Ansicht des erfindungsgemäßen Koextrusionskopf;
- Fig. 3:: eine geschnittene Seitenansicht des Koextrusionskopfes gemäß Fig. 1;
- Fig. 4:: eine Detaildarstellung der Seitenansicht des Koextrusionskopfes gemäß Fig. 3; und
- Fig. 5:: eine Vorderansicht des Koextrusionskopfes gemäß Fig. 1.

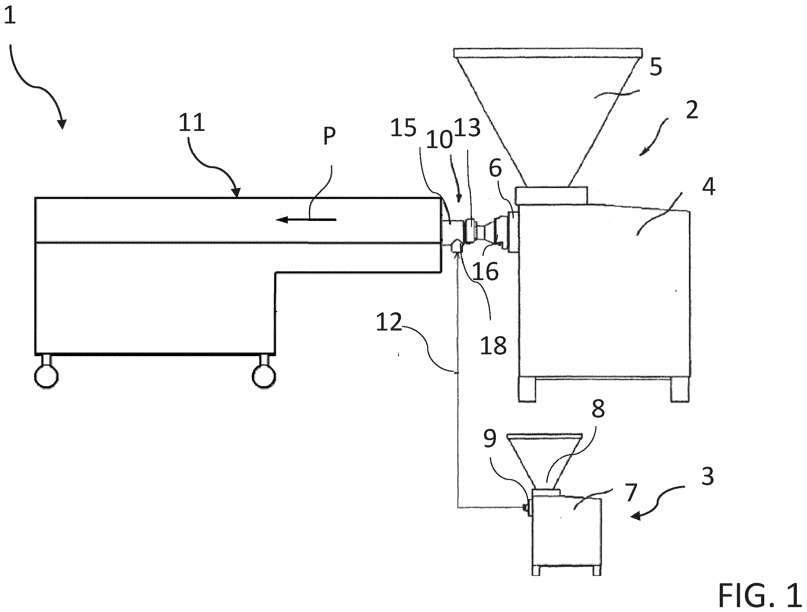

Fig. 1 zeigt eine Nahrungsmittelmaschine 1 zum Herstellen eines Stranges aus einer Lebensmittelmasse wie Wurstbrät oder dergleichen, welche mit einem Hüllmaterial umhüllt wird. Die Nahrungsmittelmaschine 1 ist vorliegend eine Koextrusionsmaschine und umfasst eine erste Füllmaschine 2 und eine zweite Füllmaschine 3. Die erste Füllmaschine 2 umfasst eine erste Förderpumpe 4, deren Position in der gezeigten Ansicht lediglich angedeutet sein soll, und einen ersten Fülltrichter 5. Weiterhin umfasst die Nahrungsmittelmaschine 1 eine zweite Füllmaschine 3 mit einem zweiten Fülltrichter 8 und einer zweiten Förderpumpe 7, deren Position ebenfalls lediglich angedeutet ist. Die erste Füllmaschine 2 weist einen ersten Auslass 6 auf und die zweite Füllmaschine 3 weist einen zweiten Auslass 9 auf.

Die Nahrungsmittelmaschine 1 weist ferner einen Koextrusionskopf 10 auf, welcher an den ersten Auslass 6 angeschlossen ist und über eine Leitung 12 ferner auch mit dem zweiten Auslass 9 verbunden ist. Abhängig von der räumlichen Anordnung der ersten und zweiten Füllmaschine 2, 3 kann zum Anschluss der ersten Füllmaschine und der zweiten Füllmaschine 2, 3 jeweils eine Leitung beliebiger Länge verwendet werden.

In Produktionsrichtung P nachgeschaltet von dem Koextrusionskopf 10 ist eine Verfestigungseinrichtung 11 angeordnet. Die Verfestigungseinrichtung 11 ist dazu ausgebildet, dass auf den Lebensmittelstrang aufgebrachte Hüllmaterial zu verfestigen. Die Verfestigungseinrichtung 11 weist dafür bevorzugt einen oder mehrere Sprühköpfe (nicht gezeigt) zum Ausbringen eines Verfestigungsmaterials wie beispielsweise Kalziumkarbonat auf. Ferner können beliebige andere Vorrichtungen wie insbesondere Abteil- oder Abdreheinrichtungen in Produktionsrichtung P der Verfestigungseinrichtung nachgeschaltet sein.

Der Koextrusionskopf 10 weist einen Förderleitungsabschnitt 13 und ein Gehäuse 15 auf. Der Förderleitungsabschnitt 13 ist mit dem Auslass 6 der ersten Füllmaschine 2 über ein einlassseitiges Ende 16 verbunden. Das Gehäuse 15 weist ferner einen Gehäuseeinlass 18 auf, welcher über die Leitung 12 mit dem zweiten Auslass 9 verbunden ist. Die Lebensmittelmasse aus der ersten Füllmaschine 2 wird in einer Produktionsrichtung P durch den Koextrusionskopf 10 gefördert und austrittsseitig mit einem Hüllmaterial aus der zweiten Füllmaschine 3 umhüllt (nicht gezeigt).

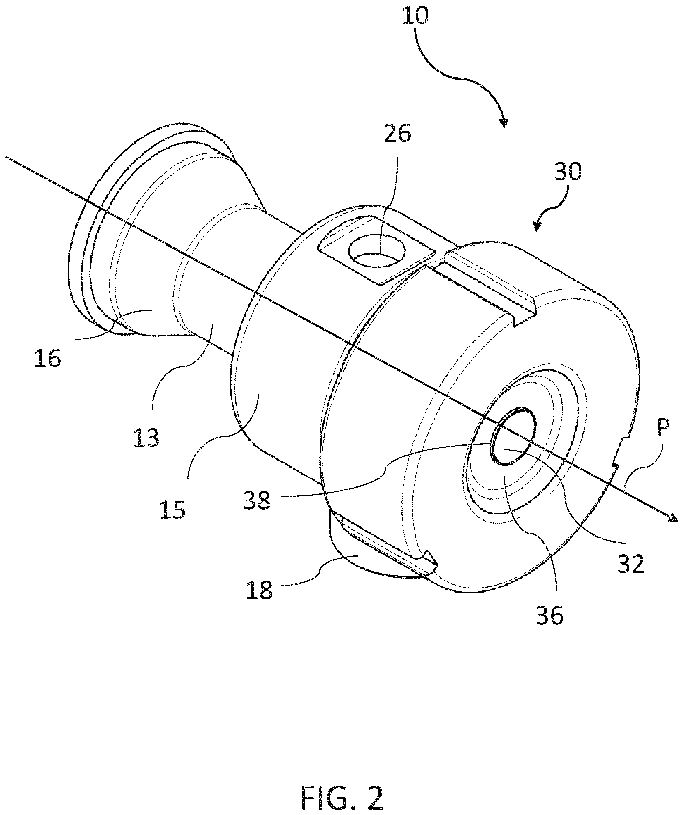

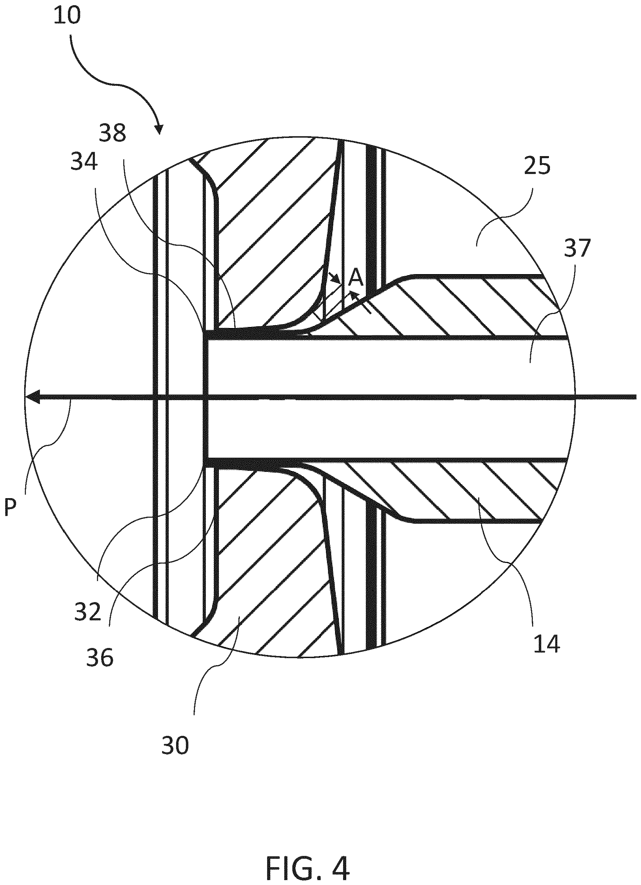

Der Koextrusionskopf 10 ist im Detail in den Fig. 2 bis 5 gezeigt. Der Koextrusionskopf 10 weist, wie bereits in Bezug auf Fig. 1 beschrieben, den Förderleitungsabschnitt 13 und das Gehäuse 15 auf. Der Förderleitungsabschnitt 13 und das Gehäuse 15 sind dabei integral ausgebildet.

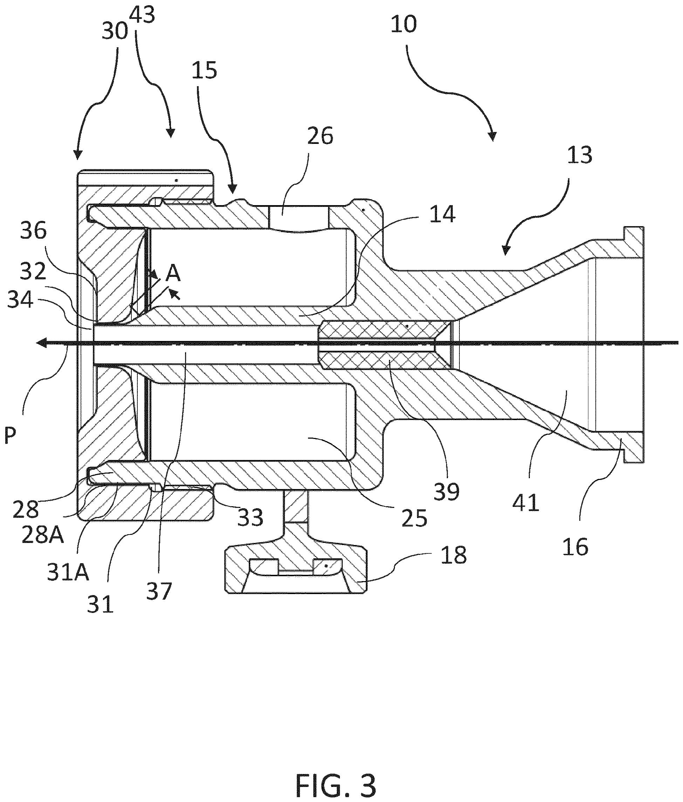

Wie insbesondere Fig. 3 zeigt, weist der Förderleitungsabschnitt 13 ein Innenrohr 14 auf, wobei zwischen dem Innenrohr 14 und einer inneren Wandung 27 des Gehäuses 15 eine Aufnahmekammer 25 ausgebildet ist. Das Gehäuse 15 weist den Gehäuseeinlass 18 zum Einlassen von Hüllmaterial in die Aufnahmekammer 25 und einer Entlüftungsöffnung 26 auf. Bevorzugt ist die Entlüftungsöffnung 26 im montierten Zustand des Koextrusionskopfes 10 in vertikaler Richtung oberhalb des Gehäuseeinlasses 18 eingeordnet. Das durch den Gehäuseeinlass 18 eingelassene Hüllmaterial steigt somit zunächst in der Aufnahmekammer 25 an und verdrängt die darin befindliche Luft, welche über die Entlüftungsöffnung 26 entweichen kann.

Der Koextrusionskopf 10 umfasst ferner einen Düsenaufsatz 30 mit einer Düsenöffnung 32 zum Auslassen von Hüllmaterial. Der Düsenaufsatz 30 ist mit einem distalen Ende 28 des Gehäuses 15 verbunden. Der Düsenaufsatz 30 weist eine korrespondierend zum distalen Ende 28 des Gehäuses 15 ausgebildete Aufnahmeöffnung 31 auf. Das Gehäuse 15 und der Düsenaufsatz 30 sind bevorzugt in einem Passsitz 43 miteinander verbunden. Das distale Ende 28 des Gehäuses 15 weist dafür eine erste Passfläche 28A auf und der Düsenaufsatz 30 weist innerhalb der Aufnahmeöffnung 31 eine korrespondierende zweite Passfläche 31A auf. Wie insbesondere in Fig. 3 ersichtlich, sind das Gehäuse 15 und der Düsenaufsatz 30 dabei über eine Schraubverbindung 33 miteinander verbunden.

Der Förderleitungsabschnitt 13 weist im Bereich des Innenrohres 14 einen Strömungskanal 37 mit konstantem Querschnitt auf. Das Innenrohr 14 weist ferner ein distales auslassseitiges Ende 34 auf, wobei die Wandstärke des Innenrohres 14 in Richtung des auslassseitigen Endes 34 - also in Produktionsrichtung P - abnimmt. Wie insbesondere in Fig. 2 gezeigt, verjüngt sich das Innenrohr 14 dabei in Produktionsrichtung P in einem an dem Düsenaufsatz 30 angrenzenden Bereich. Hüllmaterial aus der Aufnahmekammer 25 kann somit entlang des sich allmählich verjüngenden Innenrohres 14 in Richtung des auslassseitigen Endes 34 entlang fließen.

Weiterhin weist der Förderleitungsabschnitt 13 ein einlassseitiges Ende 16 auf, in welchem der Strömungskanal 41 einen vergrößerten Strömungsquerschnitt aufweist. Insbesondere nimmt der Strömungsquerschnitt ausgehend vom einlassseitigen Ende in Produktionsrichtung P ab. Zwischen dem Bereich des Strömungskanals 41 mit vergrößertem Querschnitt und dem Bereich des Strömungskanals 37 mit konstantem Strömungsquerschnitt ist ein Verdichtungseinsatz 39 gemäß einer bevorzugten Ausführungsform angeordnet. Der Abschnitt des Strömungskanales 41 mit vergrößertem Querschnitt verjüngt sich dabei in Richtung des Verdichtungseinsatzes 39. Der Verdichtungseinsatz 39 ist dazu ausgebildet, die Lebensmittelmasse zu verdichten und den Druck auf die Lebensmittelmasse im Bereich des Innenrohres 14, also im Wesentlichen im Bereich des Strömungskanals 37 mit konstantem Strömungsquerschnitt zu erhöhen.

Wie in den Fig. 3 und 2 gezeigt, steht das distale auslassseitige Ende 34 des Füllrohres 14 gegenüber einer Mündungsfläche 36 des Düsenaufsatzes 30 in Produktionsrichtung P vor. Durch das vorstehende auslassseitige Ende 34 kann das Hüllmaterial aus der Aufnahmekammer 25 ungehindert durch einen zwischen Düsenöffnung 32 und Innenrohr 14 ausgebildeten Spalt 38 austreten.

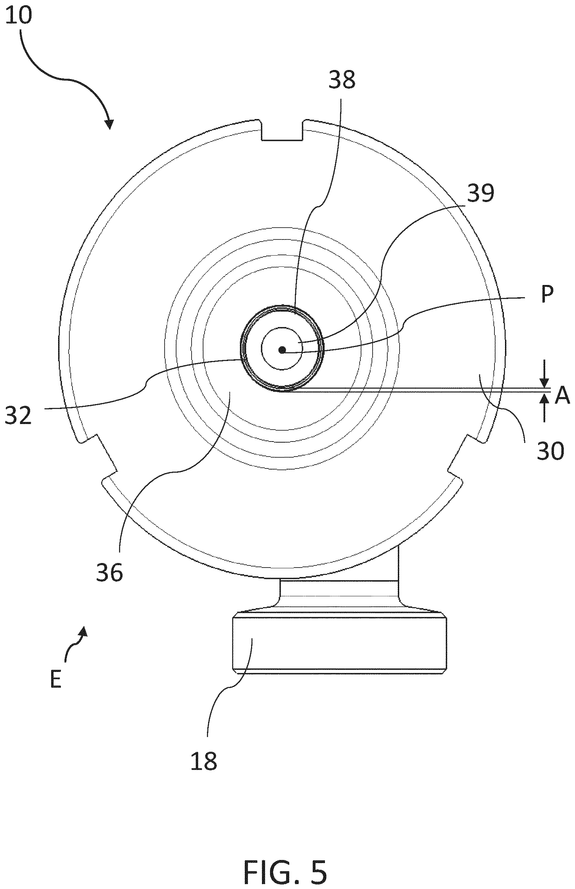

Der Spalt 38 ist in Fig. 5 in einer Ebene E orthogonal zur Produktionsrichtung P gezeigt. Der Spalt 38 erstreckt sich in der gezeigten Ansicht mit einer gleichförmigen Spaltdicke A um das Füllrohr 14. Wie ferner in der Detaildarstellung gemäß Fig. 2 ersichtlich, verändert sich die Spaltdicke A in Produktionsrichtung P und nimmt auslassseitig ein Minimum an. Die vergleichsweise größere Spaltdicke A auf Seiten der Aufnahmekammer 25 ermöglicht ein einfaches Einfließen des Hüllmaterials in den Spalt 38. Die Reduzierung der Spaltdicke A bis zum auslassseitigen Minimum ermöglicht das Ausbringen des Hüllmaterials mit einer minimalen Dicke von vorzugsweise 0,1 mm bis 1 mm.

Zur Montage des Koextrusionskopfes 10 wird zunächst der Förderleitungsabschnitt 13 mit dem Innenrohr 14 bereitgestellt. Ferner wird das sich in Produktionsrichtung P erstreckende und das Innenrohr 14 umgebende Gehäuse 15 bereitgestellt, wobei sich das Gehäuse 15 vom Förderleitungsabschnitt 13 aus in Produktionsrichtung P erstreckt und integral mit diesem ausgebildet ist. Anschließend wird ein distales Ende 28 des Gehäuses 15 - also der auslassseitige Endabschnitt - mit dem Düsenaufsatz 30 zum Verschließen der Aufnahmekammer 25 verbunden.

Bevorzugt erfolgt die Verbindung über eine form- oder kraftschlüssige Verbindung. In der gezeigten Ausführungsform gemäß der Fig. 2 bis 5 erfolgt die Verbindung durch eine kraftschlüssige Verbindung, nämlich eine Schraubverbindung 33 sowie einen Passsitz 43.

In der gezeigten Ausführungsform weisen das Innenrohr 14 sowie die Düsenöffnung 32 einen runden Querschnitt auf. Abweichende Querschnitte sind jedoch auch möglich und im Rahmen der Erfindung vorgesehen.

### Bezugszeichenliste

- 1: Nahrungsmittelmaschine
- 2: erste Füllmaschine
- 3: zweite Füllmaschine
- 4: erste Förderpumpe
- 5: erster Fülltrichter
- 6: erster Auslass
- 7: zweite Förderpumpe
- 8: zweiter Fülltrichter
- 9: zweiter Auslass
- 10: Koextrusionskopf
- 11: Verfestigungseinrichtung
- 12: Leitung
- 13: Förderleitungsabschnitt
- 14: Innenrohr
- 15: Gehäuse
- 16: einlassseitiges Ende
- 18: Gehäuseeinlass
- 25: Aufnahmekammer
- 26: Entlüftungsöffnung
- 27: innere Wandung (des Gehäuses)
- 28: distales Ende (des Gehäuses)
- 28A: erste Passfläche (des Gehäuses)
- 30: Düsenaufsatz
- 31: Aufnahmeöffnung
- 31A: zweite Passfläche des Düsenaufsatzes
- 32: Düsenöffnung
- 33: Verbindung, Schraubverbindung
- 34: auslassseitiges Ende
- 36: Mündungsfläche
- 37: Strömungskanal (mit konstantem Strömungsquerschnitt)
- 38: Spalt
- 39: Verdichtungseinsatz
- 41: Strömungskanal (mit vergrößertem Strömungsquerschnitt)
- 43: Passsitz
- P: Produktionsrichtung
- A: Spaltdicke
- E: Ebene

## Patentansprüche

1. Koextrusionskopf (10) für eine Nahrungsmittelmaschine (1), insbesondere Koextrusionsmaschine, zum Koextrudieren einer Lebensmittelmasse und einer die Lebensmittelmasse umgebenden Hülle, mit
- wenigstens einem Förderleitungsabschnitt (13) mit einem Innenrohr (14) zur Führung der zu einem Strang zu formenden Lebensmittelmasse in einer Produktionsrichtung (P), wobei ein einlassseitiges Ende (16) des Innenrohres (14) mit einem Auslass (6) einer Füllmaschine (2) verbindbar ist,
- einem sich in Produktionsrichtung (P) von dem Förderleitungsabschnitt (13) erstreckenden und das Innenrohr (14) umgebenden Gehäuse (15), und
- einer zwischen Innenrohr (14) und Gehäuse (15) ausgebildeten Aufnahmekammer (25) für ein auf den Strang aufzubringende Hüllmaterial, wobei die Aufnahmekammer (25) einen Gehäuseeinlass (18) für das Hüllmaterial aufweist,
**dadurch gekennzeichnet, dass** der Förderleitungsabschnitt (13) und das Gehäuse (15) integral ausgebildet sind und der Koextrusionskopf (10) ferner einen Düsenaufsatz (30) mit einer korrespondierend zum Innenrohr (14) ausgebildeten Düsenöffnung (32) aufweist, der mit dem Gehäuse (15), insbesondere mit einem distalen Ende (28) des Gehäuses (15), verbunden ist.

2. Koextrusionskopf (10) nach Anspruch 1,
wobei die Düsenöffnung (32) derart korrespondierend zum Innenrohr (14) ausgebildet ist, dass in einer Ebene (E) orthogonal zur Produktrichtung (P) ein Spalt (38) zwischen Düsenöffnung (32) und Innenrohr (14) zur Durchführung von Hüllmaterial ausgebildet ist.

3. Koextrusionskopf (10) nach einem der vorstehenden Ansprüche,
wobei die Düsenöffnung (32) ausgebildet ist, zumindest ein auslassseitiges Ende (34) des Innenrohres (14) aufzunehmen.

4. Koextrusionskopf (10) nach Anspruch 2 oder 3,
wobei das Innenrohr (14), insbesondere ein Strömungskanal (37) des Förderleitungsabschnittes (13), im Bereich der Düsenöffnung (32) einen konstanten Strömungsquerschnitt aufweist und das Innenrohr (14) in Produktionsrichtung (P) verjüngend ausgebildet ist.

5. Koextrusionskopf (10) nach einem der Ansprüche 2 bis 4,
wobei der Spalt (38) gleichförmig ausgebildet ist und bevorzugt eine Spaltdicke (A) in einem Bereich von 0,1-1 mm aufweist.

6. Koextrusionskopf (10) nach einem der Ansprüche 2 bis 5,
wobei der Spalt (38) eine in Produktionsrichtung (P) variierende Breite (B) aufweist, die am distalen auslassseitigen Ende (34) des Innenrohres (14) ein Minimum annimmt.

7. Koextrusionskopf (10) nach einem der vorstehenden Ansprüche,
wobei die Düsenöffnung (32) in Produktionsrichtung (P) trichterförmig ausgebildet ist.

8. Koextrusionskopf (10) nach einem der vorstehenden Ansprüche,
wobei der Düsenaufsatz (30) mit dem Gehäuse (15) durch eine lösbare form- und/oder kraftschlüssige Verbindung (33) verbunden ist, insbesondere durch mindestens eine der folgenden Verbindungen: eine Clamp-Verbindung, eine Bajonett-Verbindung oder eine Schraubverbindung (33).

9. Koextrusionskopf (10) nach einem der vorstehenden Ansprüche,
wobei das Gehäuse (15) eine erste Passfläche (28A) und der Düsenaufsatz (30) zweite Passfläche (31A) aufweist und der Düsenaufsatz (30) mit dem Gehäuse (15) durch einen Passsitz (43) verbunden ist, wobei der Passsitz (43) vorzugsweise zylindrisch oder kegelförmig ausgebildet ist.

10. Koextrusionskopf (10) nach einem der Ansprüche 3 bis 9,
wobei das Gehäuse (15) in Produktionsrichtung (P) mit dem auslassseitigen Ende (34) des Innenrohres (14) abschließt, oder das Gehäuse (15) in Produktionsrichtung (P) gegenüber dem auslassseitigen Ende (34) des Innenrohres (14) vorsteht.

11. Koextrusionskopf (10) nach einem der Ansprüche 3 bis 10,
wobei der Düsenaufsatz (30) eine in Produktionsrichtung (P) zurückgesetzte Mündungsfläche (36) aufweist, welche die Düsenöffnung (32) umgibt, und
wobei das distale auslassseitige Ende (34) des Innenrohres (14) gegenüber der Mündungsfläche (36) in Produktrichtung (P) vorsteht.

12. Koextrusionskopf (10) nach einem der vorstehenden Ansprüche,
wobei die Aufnahmekammer (25) eine Entlüftungsöffnung (26) aufweist, die im montierten Zustand des Koextrusionskopfes (10), insbesondere in vertikaler Richtung, oberhalb des Gehäuseeinlasses (18) angeordnet ist, und/oder
wobei der Förderleitungsabschnitt (13) und das Gehäuse (15) in einem Gussverfahren hergestellt sind.

13. Nahrungsmittelmaschine (1), insbesondere Koextrusionsmaschine, zum Herstellen eines Stranges aus einer Lebensmittelmasse, mit
- einer ersten Füllmaschine (2) mit einem ersten Fülltrichter (5) zum Aufnehmen der Lebensmittelmasse, einer ersten Förderpumpe (4) zum Fördern der Lebensmittelmasse und einem ersten Auslass (6) zum Abgeben der Lebensmittelmasse,
- einer zweiten Füllmaschine (3) mit einem zweiten Fülltrichter (8) zum Aufnehmen der Lebensmittelmasse, einer zweiten Förderpumpe (7) zum Fördern der Lebensmittelmasse und einem zweiten Auslass (9) zum Abgeben der Lebensmittelmasse,
- einem mit dem ersten Auslass (6) und dem zweiten Auslass (9) verbundenen Koextrusionskopf (10),
**dadurch gekennzeichnet, dass** der Koextrusionskopf (10) nach einem der vorstehenden Ansprüche ausgebildet ist.

14. Nahrungsmittelmaschine nach Anspruch 13, ferner umfassend:
mindestens einer Verfestigungseinrichtung (11) zum Verfestigen des auf den Strang aufgebrachten Hüllmaterials.

15. Verfahren zur Montage eines Koextrusionskopfes, insbesondere eines Koextrusionskopfes nach einem der Ansprüche 1 bis 12, umfassend die Schritte:
- Bereitstellen von wenigstens einem Förderleitungsabschnitt (13) mit einem Innenrohr (14) zur Führung der zu einem Strang zu formenden Lebensmittelmasse in einer Produktionsrichtung (P) und eines sich in Produktionsrichtung (P) von dem Förderleitungsabschnitt (13) erstreckenden und das Innenrohr (14) umgebenden Gehäuses (15), wobei der Förderleitungsabschnitt (13) und das Gehäuse (15) integral ausgebildet sind, und
wobei zwischen Innenrohr (14) und Gehäuse (15) eine Aufnahmekammer (25) für ein auf den Strang aufzubringende Hüllmaterial ausgebildet ist, wobei die Aufnahmekammer (25) einen Gehäuseeinlass (18) für das Hüllmaterial aufweist, und
- Verbinden eines distalen Endes (28) des Gehäuses (15) mit einem Düsenaufsatz (30) mit einer korrespondierend zum Innenrohr (14) ausgebildeten Düsenöffnung (32) zum Verschließen der Aufnahmekammer (25).

## Claims

1. A coextrusion head (10) for a food processing machine (1), in particular a coextrusion machine, for coextruding a food mass and a casing surrounding the food mass, comprising
- at least one feed line section (13) having an inner pipe (14) for conducting in a production direction (P) the food mass to be formed into a strand, wherein an inlet end (16) of the inner pipe (14) is connectable to an outlet (6) of a stuffing machine (2),
- a housing (15) extending in the production direction (P) from the feed line section (13) and surrounding the inner pipe (14), and
- a receiving chamber (25), formed between the inner pipe (14) and the housing (15), for a casing material to be applied to the strand, said receiving chamber (25) having a housing inlet (18) for the casing material,
**characterized in that** the feed line section (13) and the housing (15) are integrally embodied and the coextrusion head (10) further comprises a die attachment (30) that has a die opening (32) shaped correspondingly to the inner pipe (14) and that is connected to the housing (15), in particular to a distal end (28) of the housing (15).

2. The coextrusion head (10) according to claim 1,
wherein the die opening (32) is shaped correspondingly to the inner pipe (14) in such a way that a gap (38) for the passage of casing material is formed between the die opening (32) and the inner pipe (14) in a plane (E) orthogonal to the production direction (P).

3. The coextrusion head (10) according to any one of the preceding claims,
wherein the die opening (32) is designed to receive at least an outlet end (34) of the inner pipe (14).

4. The coextrusion head (10) according to claim 2 or 3,
wherein the inner pipe (14), in particular a flow channel (37) of the feed line section (13), has a constant flow cross-section in the region of the die opening (32) and the inner pipe (14) tapers in the production direction (P).

5. The coextrusion head (10) according to any one of claims 2 to 4,
wherein the gap (38) is uniform and preferably has a gap width (A) in a range from 0.1 mm to 1 mm.

6. The coextrusion head (10) according to any one of claims 2 to 5,
wherein the gap (38) has a width (B) that varies in the production direction (P) and reaches a minimum at the distal outlet end (34) of the inner pipe (14).

7. The coextrusion head (10) according to any one of the preceding claims,
wherein the die opening (32) is funnel-shaped in the production direction (P).

8. The coextrusion head (10) according to any one of the preceding claims,
wherein the die attachment (30) is connected to the housing (15) by a releasable form- and/or force-fitting connection (33), in particular by at least one of the following connections: a clamp connection, a bayonet connection or a screw connection (33).

9. The coextrusion head (10) according to any one of the preceding claims,
wherein the housing (15) has a first mating surface (28A) and the die attachment (30) has a second mating surface (31A) and the die attachment (30) is connected to the housing (15) by a mating fit (43), wherein the mating fit (43) is preferably cylindrical-shaped or cone-shaped.

10. The coextrusion head (10) according to any one of claims 3 to 9,
wherein the housing (15) terminates in the production direction (P) with the outlet end (34) of the inner pipe (14), or the housing (15) protrudes in the production direction (P) in relation to the outlet end (34) of the inner pipe (14).

11. The coextrusion head (10) according to any one of claims 3 to 10,
wherein the die attachment (30) has an orifice surface (36) that is recessed relative to the production direction (P) and which surrounds the die opening (32), and
wherein the distal outlet end (34) of the inner pipe (14) protrudes in the production direction (P) in relation to the orifice surface (36).

12. The coextrusion head (10) according to any one of the preceding claims,
wherein the receiving chamber (25) has a vent hole (26) which in the assembled state of the coextrusion head (10) is arranged above the housing inlet (18), in particular in the vertical direction, and/or
wherein the feed line section (13) and the housing (15) are manufactured in a casting process.

13. A food processing machine (1), in particular a coextrusion machine, for producing a strand made of a food mass, comprising
- a first stuffing machine (2) having a first feed hopper (5) for receiving the food mass, a first feed pump (4) for conveying the food mass and a first outlet (6) for discharging the food mass,
- a second stuffing machine (3) having a second feed hopper (8) for receiving the food mass, a second feed pump (7) for conveying the food mass and a second outlet (9) for discharging the food mass,
- a coextrusion head (10) connected to the first outlet (6) and the second outlet (9),
**characterized in that** the coextrusion head (10) is embodied according to any one of the preceding claims.

14. The food processing machine according to claim 13, further comprising:
at least one hardening device (11) for hardening the casing material applied to the strand.

15. A method of assembling a coextrusion head, in particular a coextrusion head according to any one of claims 1 to 12, comprising the steps of:
- providing at least one feed line section (13) having an inner pipe (14) for conducting in a production direction (P) the food mass to be formed into a strand, and a housing (15) extending in the production direction (P) from the feed line section (13) and surrounding the inner pipe (14), wherein the feed line section (13) and the housing (15) are integrally embodied, and
wherein a receiving chamber (25) for a casing material to be applied to the strand is formed between the inner pipe (14) and the housing (15), said receiving chamber (25) having a housing inlet (18) for the casing material, and
- connecting a distal end (28) of the housing (15) to a die attachment (30) having a die opening (32) shaped correspondingly to the inner pipe, in order to seal the receiving chamber (25).

## Revendications

1. Tête de coextrusion (10) pour une machine pour produits alimentaires (1), en particulier machine de coextrusion, pour coextruder une substance alimentaire et une enveloppe entourant la substance alimentaire, comprenant
- au moins une partie de conduite d'acheminement (13) avec un tube intérieur (14) pour guider la substance alimentaire à former un tronçon dans une direction de production (P), une extrémité côté entrée (16) du tube intérieur (14) pouvant être reliée à une sortie (6) d'une machine de remplissage (2),
- un boîtier (15) s'étendant dans la direction de production (P) à partir de la partie de conduite d'acheminement (13) et entourant le tube intérieur (14), et
- une chambre de réception (25) réalisée entre le tube intérieur (14) et le boîtier (15) pour un matériau d'enveloppe à mettre en place sur le tronçon, la chambre de réception (25) présentant une entrée de logement (18) pour le matériau d'enveloppe,
**caractérisée en ce que** la partie de conduite d'acheminement (13) et le boîtier (15) sont formés d'une seule pièce et la tête de coextrusion (10) présente en outre un embout de buse (30) comprenant une ouverture de buse (32) configurée pour correspondre au tube intérieur (14), qui est reliée au boîtier (15), en particulier à une extrémité distale (28) du boîtier (15).

2. Tête de coextrusion (10) selon la revendication 1,
dans laquelle l'ouverture de buse (32) est configurée pour correspondre au tube intérieur (14), de sorte que dans un plan (E) perpendiculaire à la direction de production (P) une fente (38) est réalisée entre l'ouverture de buse (32) et le tube intérieur (14) pour faire passer du matériau d'enveloppe.

3. Tête de coextrusion (10) selon l'une quelconque des revendications précédentes,
dans laquelle l'ouverture de buse (32) est configurée pour recevoir au moins une extrémité côté sortie (34) du tube intérieur (14).

4. Tête de coextrusion (10) selon la revendication 2 ou 3,
dans laquelle le tube intérieur (14), en particulier un canal d'écoulement (37) de la partie de conduite d'acheminement (13), présente dans la zone de l'ouverture de buse (32) une section transversale d'écoulement constante et le tube intérieur (14) est formé de manière à se rétrécir dans la direction de production (P).

5. Tête de coextrusion (10) selon l'une quelconque des revendications 2 à 4,
dans laquelle la fente (38) est formée de manière uniforme et présente de préférence une épaisseur de fente (A) dans une plage de 0,1-1 mm.

6. Tête de coextrusion (10) selon l'une quelconque des revendications 2 à 5,
dans laquelle la fente (38) a une largeur (B) variant dans la direction de production (P), qui présente un minimum à l'extrémité côté sortie (34) distale du tube intérieur (14).

7. Tête de coextrusion (10) selon l'une quelconque des revendications précédentes,
dans laquelle l'ouverture de buse (32) est réalisée en forme d'entonnoir dans la direction de production (P).

8. Tête de coextrusion (10) selon l'une quelconque des revendications précédentes,
dans laquelle l'embout de buse (30) est relié au boîtier (15) par une liaison libérable par coopération de formes et/ou à force (33), en particulier par au moins une des liaisons suivantes : une liaison de serrage, une liaison à baïonnette ou une liaison vissée (33).

9. Tête de coextrusion (10) selon l'une quelconque des revendications précédentes,
dans laquelle le boîtier (15) présente une première surface d'ajustement (28A) et l'embout de buse (30) une deuxième surface d'ajustement (31A) et l'embout de buse (30) est relié au boîtier (15) par un siège d'ajustement (43), le siège d'ajustement (43) étant réalisé de préférence de manière cylindrique ou conique.

10. Tête de coextrusion (10) selon l'une quelconque des revendications 3 à 9,
dans laquelle le boîtier (15) se termine dans la direction de production (P) par l'extrémité côté sortie (34) du tube intérieur (14), ou le boîtier (15) fait saillie dans la direction de production (P) par rapport à l'extrémité côté sortie (34) du tube intérieur (14).

11. Tête de coextrusion (10) selon l'une quelconque des revendications 3 à 10,
dans laquelle l'embout de buse (30) présente une surface d'embouchure (36) en retrait dans la direction de production (P), laquelle entoure l'ouverture de buse (32), et
dans laquelle l'extrémité côté sortie (34) distale du tube intérieur (14) fait saillie dans la direction de production (P) par rapport à la surface d'embouchure (36).

12. Tête de coextrusion (10) selon l'une quelconque des revendications précédentes,
dans laquelle la chambre de réception (25) présente une ouverture d'aération (26), qui en état monté de la tête de coextrusion (10), en particulier dans la direction verticale, est disposée au-dessus de l'entrée de logement (18), et/ou
dans laquelle la partie de conduite d'acheminement (13) et le boîtier (15) sont fabriqués par un procédé de moulage.

13. Machine pour produits alimentaires (1), en particulier machine de coextrusion, pour fabriquer un tronçon à partir d'une substance alimentaire, comprenant
- une première machine de remplissage (2) comprenant un premier entonnoir de remplissage (5) pour recevoir la substance alimentaire, une première pompe d'acheminement (4) pour acheminer la substance alimentaire et une première sortie (6) pour distribuer la substance alimentaire,
- une deuxième machine de remplissage (3) comprenant un deuxième entonnoir de remplissage (8) pour recevoir la substance alimentaire, une deuxième pompe d'acheminement (7) pour acheminer la substance alimentaire et une deuxième sortie (9) pour distribuer la substance alimentaire,
- une tête de coextrusion (10) reliée à la première sortie (6) et la deuxième sortie (9), **caractérisée en ce que** la tête de coextrusion (10) est réalisée selon l'une quelconque des revendications précédentes.

14. Machine pour produits alimentaires selon la revendication 13, comprenant en outre : au moins un dispositif de solidification (11) pour solidifier le matériau d'enveloppe mis en place sur le tronçon.

15. Procédé pour le montage d'une tête de coextrusion, en particulier d'une tête de coextrusion selon l'une quelconque des revendications 1 à 12, comprenant les étapes :
- de fourniture d'au moins une partie de conduite d'acheminement (13) avec un tube intérieur (14) pour guider la substance alimentaire à former un tronçon dans une direction de production (P) et d'un boîtier (15) s'étendant dans la direction de production (P) à partir de la partie de conduite d'acheminement (13) et entourant le tube intérieur (14), la partie de conduite d'acheminement (13) et le boîtier (15) étant formés d'une seule pièce, et
dans lequel une chambre de réception (25) pour un matériau d'enveloppe à mettre en place sur le tronçon est réalisée entre le tube intérieur (14) et le boîtier (15), la chambre de réception (25) présentant une entrée de logement (18) pour le matériau d'enveloppe, et
- de liaison d'une extrémité distale (28) du boîtier (15) avec un embout de buse (30) comprenant une ouverture de buse (32) configurée pour correspondre au tube intérieur (14) pour fermer la chambre de réception (25).
